# EUROPÄISCHE PATENTANMELDUNG

(11) **EP 2 866 308 A1**
(43) Veröffentlichungstag der Anmeldung: **29.04.2015**
(21) Anmeldenummer: 13189672.2
(22) Anmeldetag: 22.10.2013
(51) Int. Cl.: H01R 13/621, H01R 13/631

(54) **Mechanische Sicherungsanordnung**

(71) Anmelder: Multi-Holding AG, 4123 Allschwil (CH)
(72) Erfinder: Jehmlich, Rico, 79576 Weil am Rhein (DE)
(74) Vertreter: Frischknecht, Harry Ralph

(57) **Zusammenfassung**

Eine mechanische Sicherungsanordnung (1) zur mechanischen relativen Sicherung von zwei Elementen (2, 3), insbesondere von zwei Elementen eines Gehäuses eines elektrischen Steckverbinders, umfasst ein Sicherungselement (4) mit einem Befestigungsabschnitt (5) und einem Anschlagsabschnitt (6), ein Abstandshalter (7) mit einer Öffnung (8), durch welche sich das Sicherungselement (4) teilweise hindurch erstreckt, ein erstes Element (2) mit einer Aufnahme (9) zur Aufnahme des Befestigungsabschnittes (5) und ein zweites Element (3) mit einem sich von einer Oberseite (25) zu einer Unterseite (26) erstreckenden Durchbruch (10), durch welchen sich der Abstandshalter (7) und das Sicherungselement (4) teilweise hindurch erstrecken,
wobei das Sicherungselement (4) von einer die freie Relativbewegung zwischen den beiden Elementen (2, 3) zulassende Freigabelage in eine die Relativbewegung einschränkende Sicherungslage bringbar ist.

## Beschreibung

### TECHNISCHES GEBIET

Die vorliegende Erfindung betrifft eine mechanische Sicherungsanordnung zur mechanischen relativen Sicherung von zwei Elementen, insbesondere von zwei Elementen eines Steckergehäuses eines elektrischen Steckverbinders, nach dem Oberbegriff von Anspruch 1 und ein Stecker nach dem Oberbegriff von Anspruch 13.

### STAND DER TECHNIK

Aus dem Stand der Technik sind Befestigungseinrichtungen zur Verbindung von verschiedenen Bauteilen bekannt.

Beispielsweise zeigt die EP 1 036 944 eine Befestigungseinrichtung zur Befestigung eines Kupplungsgehäuses an einem Kraftfahrzeug. Die Befestigungsschraube ist dabei mit einem Positionierelement derart gehalten, dass die Schraube im gelösten Zustand relativ zum Kupplungsgehäuse gesichert ist. Mit der Schraube selbst wird eine echte Befestigung des Kupplungsgehäuses zum Kraftfahrzeug bereitgestellt, wobei die Schraube das Kupplungsgehäuse zum Kraftfahrzeug festklemmt.

Im Gebiet der Verbindung von zwei Modulen eines elektrischen Steckverbinders lässt sich aber die technische Lehre der EP 1 036 944 nicht anwenden, da in diesem Gebiet meist keine echte Befestigung nötig ist.

Ein derartiger elektrischer Steckverbinder ist beispielsweise aus der WO 2009/059440 bekannt geworden. Gemäss der WO 2009/059440 umfasst ein Stecker ein Steckergehäuse und ein Rahmenelement, wobei im Rahmenelement Verschleissteile gelagert sind, die aufgrund der Lagerung im Rahmenelement einfach und schnell vom Steckergehäuse trennbar sind. Das Rahmenelement als solches ist über die elektrischen Kontakte im Rahmenelement bereits zu den elektrischen Kontakten im Steckergehäuse gesichert.

### DARSTELLUNG DER ERFINDUNG

Ausgehend von diesem Stand der Technik liegt der Erfindung die Aufgabe zugrunde, eine Befestigungsanordnung anzugeben, welche zwei Elemente schwimmend bewegbar zueinander sichert, so dass eine Bewegung zwischen den beiden Elementen ermöglicht wird und dass die beiden Elemente aber nicht voneinander trennbar sind.

Diese Aufgabe löst der Gegenstand vom Anspruch 1. Demgemäss dient eine mechanische Sicherungsanordnung zur mechanischen relativen Sicherung von zwei Elementen, insbesondere von zwei Elementen eines Gehäuses eines elektrischen Steckverbinders. Die Sicherungsanordnung umfasst ein Sicherungselement mit einem Befestigungsabschnitt und einem Anschlagsabschnitt, einen Abstandshalter mit einer Öffnung, durch welche sich das Sicherungselement teilweise hindurch erstreckt, ein erstes Element mit einer Aufnahme zur Aufnahme des Befestigungsabschnittes des Sicherungselementes und ein zweites Element mit einem sich von einer Oberseite zu einer Unterseite erstreckenden Durchbruch, durch welchen sich der Abstandshalter und das Sicherungselement teilweise hindurch erstrecken. Das Sicherungselement ist von einer die freie Relativbewegung zwischen den beiden Elementen zulassende Freigabelage in eine die Relativbewegung einschränkende Sicherungslage bringbar. Der Anschlagsabschnitt erstreckt sich, insbesondere auf der besagten Oberseite, zumindest teilweise seitlich über den Durchbruch und stellt dadurch einen Anschlag für das erste Element bereit. Der Abstandshalter steht an einer Kontaktfläche des ersten Elementes an und wird mit dem Anschlagsabschnitt, der beabstandet zur Kontaktfläche liegt, zum ersten Element in Sicherungslage fest geklemmt. Zwischen dem Durchbruch des zweiten Elementes und dem Abstandshalter ist radiales Spiel vorhanden, so dass das zweite Element relativ zum ersten Element innerhalb des radialen Spiels bewegbar ist. Weiter ist in Sicherungslage der Abstand zwischen der Kontaktfläche und dem Anschlagsabschnitt grösser ist als die Länge des Durchbruchs im zweiten Element, so dass das zweite Element relativ zum ersten Element innerhalb eines axialen Spiels zwischen der Kontaktfläche und dem Anschlagsabschnitt bewegbar ist.

In der Sicherungslage wird die freie Relativbewegung zwischen dem ersten Element und dem zweiten Element eingeschränkt. Durch das Vorhandensein des radialen und des axialen Spiels wird aber dennoch eine Relativbewegung zwischen den beiden Elementen innerhalb des Spiels erlaubt. Das Spiel hat insbesondere den Vorteil, dass bei der Montage allfällige Toleranzen zwischen den beiden Elementen einfach ausgleichbar sind.

In der Freigabelage ist das erste Element vollständig frei vom zweiten Element. Das im zweiten Element gelagerte Sicherungselement greift nicht in die Aufnahme am zweiten Element ein. In Sicherungslage wird die mögliche Relativbewegung zwischen den beiden Elementen auf das axiale und radiale Spiel eingeschränkt. Über das Spiel wird die schwimmende Lagerung zwischen den beiden Elementen bereitgestellt.

Die Länge des Durchbruches im zweiten Element kann als Abstand zwischen der Oberseite und der Unterseite in den Bereichen, die sich um den Durchbruch herum erstrecken, definiert werden. Unter den Bereichen werden die Teile Oberseite bzw. der Unterseite verstanden, welche für die Funktion des axialen Spiels relevant sind.

Vorzugsweise weist der Abstandshalter ein im Bereich der Kontaktfläche liegender Wulstabschnitt auf, welcher zwischen den beiden Elementen liegt, wobei der Abstand zwischen dem Wulstabschnitt und dem Anschlagsabschnitt grösser ist als die Länge des Durchbruchs im zweiten Element, so dass das zweite Element relativ zum ersten Element innerhalb eines axialen Spiels zwischen dem Wulstabschnitt und dem Anschlagsabschnitt bewegbar ist.

Der Wulstabschnitt liegt im Bereich der Unterseite zwischen dem ersten und dem zweiten Element und stellt eine Verliersicherung bereit.

Mit anderen Worten gibt es im Wesentlichen zwei Ausführungsformen bezüglich des Abstandes. In einer Ausführungsform wird der Abstand als Abstand zwischen der Kontaktfläche und dem Anschlagsabschnitt und in der anderen Ausführungsform wird der Abstand als Abstand zwischen dem Wulstabschnitt und dem Anschlagsabschnitt definiert. Bei beiden Ausführungsformen gilt aber, dass der Abstand zwischen Kontaktfläche und Anschlagsabschnitt grösser ist als der Abstand des Durchbruches im zweiten Element bzw. des Abstandes zwischen der Oberseite und der Unterseite in den Bereichen, die sich um den Durchbruch herum erstrecken.

Vorzugsweise erstreckt sich der Wulstabschnitt vollständig oder teilweise umlaufend um den Abstandshalter herum und weist eine Ausdehnung, insbesondere einen Durchmesser, auf, welcher grösser ist als der Durchmesser des Durchbruches im zweiten Element.

Vorzugsweise ist der Abstandshalter als Hülse mit einer ersten Stirnfläche und einer zweiten Stirnfläche ausgebildet, wobei die Hülse im Querschnitt vorzugsweise ringförmig ausgebildet ist.

In einer bevorzugten Ausführung steht in Sicherungslage die erste Stirnfläche mit der Kontaktfläche und die zweite Stirnfläche mit dem Anschlagsabschnitt in Kontakt. Die zweite Strinfläche liegt bezüglich des Durchbruches gesehen vorzugsweise über der Oberseite des ersten Elementes.

Besonders bevorzugt erstreckt sich der ggf. vorhandene Wulst von der ersten Stirnfläche in Richtung der zweiten Stirnfläche.

Das Sicherungselement ist vorzugsweise eine Schraube, wobei der Befestigungsabschnitt ein Aussengewinde ist und der Anschlagsabschnitt durch den Schraubenkopf bereitgestellt wird.

Vorzugsweise weist die Schraube zwischen Aussengewinde und Schraubenkopf ein Schaftabschnitt auf, dessen Durchmesser kleiner als der Kerndurchmesser des Aussengewindes ist. Der Schaftabschnitt ist aussenseitig im Wesentlichen glatt ausgebildet. Die Schraube kann auch als Halsschraube bezeichnet werden.

Die besagte Aufnahme im ersten Element umfasst ein Innengewinde, wobei die Schraube mit dem Aussengewinde in das Innengewinde einschraubbar ist.

Vorzugsweise weist die Öffnung im Abstandshalter ein Innengewinde auf, welches mit dem Aussengewinde des Sicherungselementes zusammenarbeitet, wobei in der Sicherungslage die beiden Gewinde vorzugsweise nicht im Eingriff sind.

Besonders bevorzugt erstreckt sich das Innengewinde im Abstandshalter nur über einen Teilbereich der Öffnung, wobei der gewindefreie Teilbereich länger ist als die Länge des Innengewindes im ersten Element.

Vorteilhafterweise weist der Anschlagsabschnitt eine Ausdehnung, insbesondere einen Durchmesser, auf, welche(r) grösser ist als der Durchmesser des Durchbruches im zweiten Element.

Besonders bevorzugt ist das axiale Spiel kleiner als das radiale Spiel. Alternativ kann das axiale Spiel auch dem radialen Spiel entsprechen oder das axiale Spiel ist grösser als das radiale Spiel.

Ein buchsenseitiger oder stiftseitiger Stecker umfasst ein als erstes Element ausgebildetes Steckergehäuse und ein mit dem Steckergehäuse verbindbares als zweites Element ausgebildetes Zusatzelement, insbesondere ein Rahmenelement, sowie mindestens eine mechanische Sicherungsanordnung zur Sicherung des Zusatzelements zum Steckergehäuse nach obiger Beschreibung. Rahmenelement und Steckergehäuse dienen insbesondere der Aufnahme von Elektroelementen mit unterschiedlichen Funktionen.

Vorzugsweise ragt das Steckergehäuse in das Zusatzelement ein oder das Zusatzelement ragt in das Steckergehäuse ein.

Der Stecker umfasst mindestens eine Kontaktkammer und mindestens eine Aufnahmekammer, welche im wesentlichen über der Kontaktkammer angeordnet ist, und wobei in der mindestens einen Kontaktkammer ein Anschlussmodul mit elektrisch leitenden Elementen zur Verbindung an wenigstens eine erste periphere Vorrichtung, insbesondere ein Kabel, und in der mindestens einen Aufnahmekammer ein Verschleissmodul mit elektrisch leitenden Elementen zur Verbindung mit einer zweiten peripheren Vorrichtung, insbesondere ein komplementärer Stecker, anordbar ist, wobei die elektrisch leitenden Elemente des Anschlussmoduls mit den elektrisch leitenden Elementen des Verschleissmoduls verbindbar sind.

Das erste Element und das zweite Element können aber auch anders ausgebildet sein. Beispielsweise kann das erste bzw. das zweite Element eine Platine oder ein Schaltungsträger sein. Das entsprechende zweite bzw. das entsprechende erste Element kann beispielsweise eine Gehäuse oder ein Träger sein.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Perspektivansicht eines Steckers mit einer erfindungsgemässen mechanischen Sicherungsanordnung nach einer Ausführungsform;
- Fig. 2: eine teilweise geschnittene Darstellung durch die Figur 1;
- Fig. 3: eine Detailansicht des Details III der Figur 2; und
- Fig. 4: eine Detailansicht des Details IV der Figur 2.

### BESCHREIBUNG BEVORZUGTER AUSFÜHRUNGSFORMEN

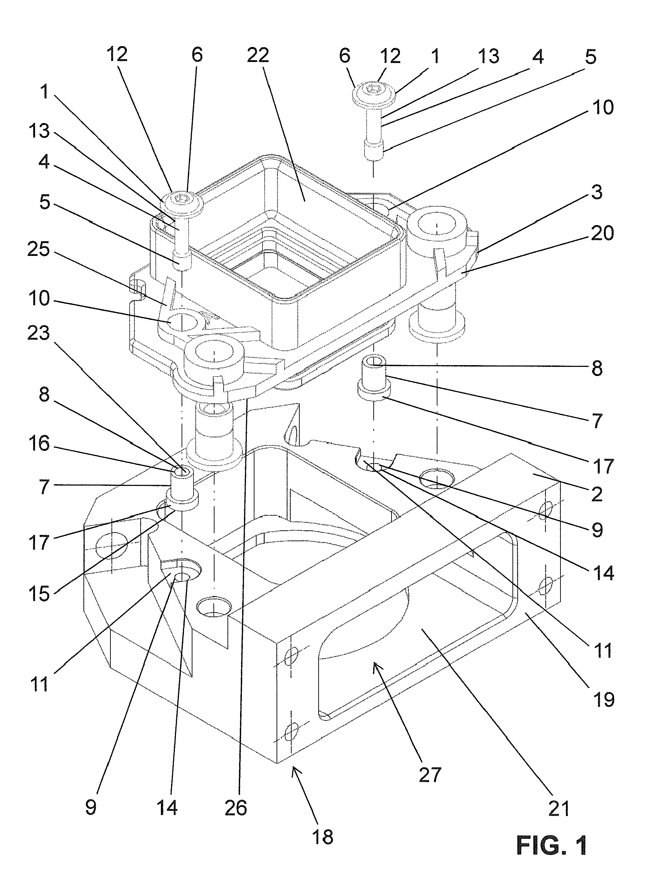

In der Figur 1 wird ein Stecker 18 mit einem Steckergehäuse 19 und einem Zusatzelement 20 sowie mit einer Ausführungsform einer mechanischen Sicherungsanordung 1 zur mechanischen relativen Sicherung von Steckergehäuse 19 und Zusatzelement oder Rahmenelement 20 zueinander gezeigt.

Der Stecker 18 umfasst in der Figur 1 gezeigten Variante ein Steckergehäuse 19 und ein mit dem Steckergehäuse 19 verbindbares Zusatzelement 20, was hier ein Rahmenelement darstellt. Weiter sind hier zwei mechanische Sicherungsanordnungen 1 zur Sicherung des Zusatzelementes 20 zum Steckergehäuse 19 angeordnet. Steckergehäuse 19 und Zusatzelement 20 können auch anders ausgebildet sein und in einer allgemeinen Form als erstes Element 2 und als zweites Element 3 bezeichnet werden.

Die mechanische Sicherungsanordnung 1 ist von einer Freigabelage in eine Sicherungslage bzw. von der Sicherungslage in die Freigabelage bringbar. In der Freigabelage lassen sich die beiden Elemente 2, 3, hier das Steckergehäuse 19 und das Zusatzelement 20, frei und relativ zueinander bewegen. In der Sicherungslage wird eine relativ Bewegung zwischen den beiden Elementen 2, 3 entsprechend eingeschränkt. Die Einschränkung ist dabei derart, dass sich die beiden Elemente 2, 3 relativ zueinander innerhalb eines bestimmten Spiels verschieben können.

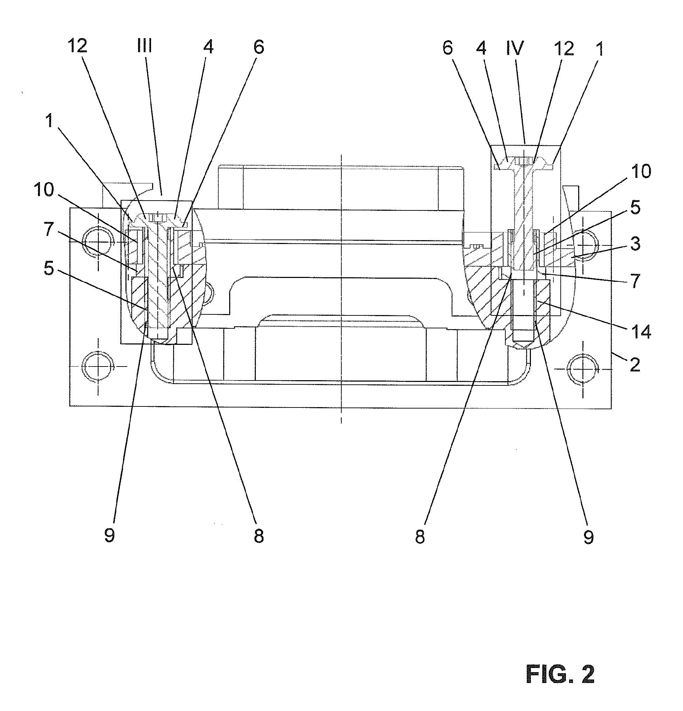

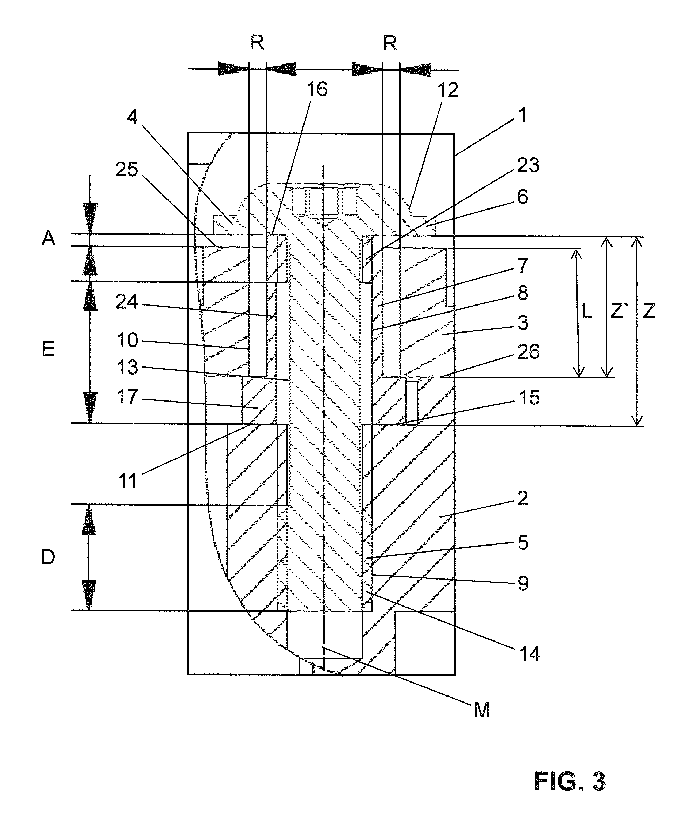

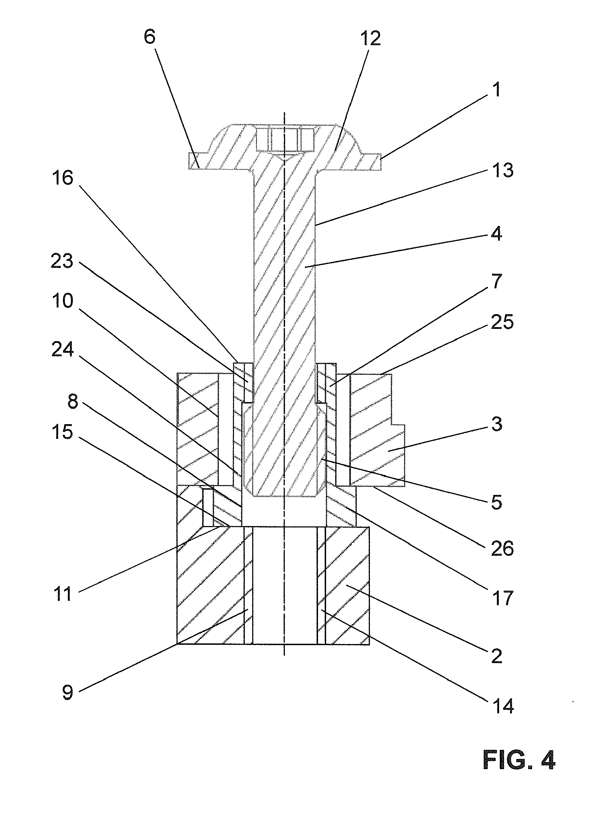

Die Figur 2 zeigt eine teilweise geschnittene Darstellung des Steckers 18 gemäss der Figur 1, wobei die Schnittbereiche durch die mechanischen Sicherungsanordnungen 1 gelegt worden sind. In den Figuren 3 und 4 werden die Teilansichten der Schnittdarstellungen gemäss der Figur 2 gezeigt. Anhand dieser Figuren und auch anhand Figur 1 wird nun die mechanische Sicherheitsanordnung 1 im Detail beschrieben.

Die mechanische Sicherungsanordnung 1 umfasst ein Sicherungselement 4 mit einem Befestigungsabschnitt 5 und einem Anschlagsabschnitt 6, einen Abstandshalter 7 mit einer Öffnung 8, durch welche sich das Sicherungselement 4 teilweise hindurcherstreckt, ein erstes Element 2 mit einer Aufnahme 9 zur Aufnahme des Befestigungsabschnittes 5 und ein zweites Element 3 mit einem von seiner Oberseite 25 zu seiner Unterseite 26 erstreckenden Durchbruch 10, durch welchen sich Abstandshalter 7 und das Sicherungselement 4 teilweise hindurcherstrecken.

Die wesentlichen Teile der mechanischen Sicherungsanordnung 1 sind also das Sicherungselement 4, der Abstandshalter 7 sowie das erste Element 2 und das zweite Element 3.

Das Sicherungselement 4 ist von einer die freie Relativbewegung zwischen den beiden Elementen 2, 3 zulassende Freigabelage in eine die Relativbewegung einschränkende Sicherungslage bringbar. In der Figur 3 wird die Sicherungslage gezeigt und in der Figur 4 wird die Freigabelage gezeigt. In der Freigabelage ist ein freies Bewegen der beiden Elemente 2, 3 zueinander möglich, während in der Sicherungslage die Relativbewegung zwischen den beiden Elementen 2, 3 entsprechend des Spiels, wie unten beschrieben, eingeschränkt wird. Es kann auch von einer schwimmenden Lagerung gesprochen werden.

Der Anschlagsabschnitt 6 des Sicherungselementes 4 erstreckt sich zumindest teilweise seitlich über den Durchbruch 10. Vorzugsweise ist also die Ausdehnung des Anschlagsabschnittes 6 grösser als der Durchmesser des Durchbruches 10. Hierdurch wird ein Anschlag für das zweite Element 3 bereitgestellt. Das heisst, dass das zweite Element 3, wenn dieses gegen den Anschlagsabschnitt 6 bewegt wird, durch diesen Anschlagsabschnitt 6 in seiner Bewegung gehindert wird. Das zweite Element 3 kann am Anschlagsabschnitt 6 entsprechend anstehen.

Vorzugsweise liegt der Anschlagsabschnitt 6 über der Oberfläche 25 des zweiten Elementes 3.

Der Abstandshalter 7 steht mit einer Kontaktfläche 11 des ersten Elementes 2 in Kontakt bzw. liegt an dieser Kontaktfläche 11 an. Weiter wird der Abstandshalter 7 mit dem Anschlagsabschnitt 6, der beabstandet zur Kontaktfläche 11 liegt, zum ersten Element 2 in der Sicherungslage festgeklemmt. Der Abstandshalter 7 wird also mit dem Anschlagsabschnitt 6 des Sicherungselementes 4 gegen die Kontaktfläche 11 des ersten Elementes 2 gesichert. In der Freigabelage kann sich der Abstandshalter 7 frei zur Kontaktfläche 11 bewegen.

Die Kontaktfläche 11 wird hier durch eine Nut bereitgestellt, welche eine Art Lagerungsaufnahme für den Abstandshalter bereitstellt. Die Kontaktfläche 11 kann auch eine beliebige Fläche am ersten Element 2 sein. Die Nut könnte aber auch im zweiten Element 3 angeordnet sein, wobei dann die Kontaktfläche am ersten Element 2 vorzugsweise die Oberfläche desselben ist oder eine beliebige Fläche. Auch wäre es denkbar, dass an beiden Elementen 2 und 3 je eine Nut angeordnet ist.

Zwischen dem Durchbruch 10 des zweiten Elementes 3 und dem Abstandshalter 7 ist radiales Spiel R vorhanden. Somit ist das zweite Element 3 relativ zum ersten Element 2 innerhalb des radialen Spiels R bewegbar. Das radiale Spiel R kann in der vorliegenden Ausführungsform als Bewegung in eine radiale, also senkrechte, Richtung R zur Mittelachse M des Sicherungselementes 4 verstanden werden. Das zweite Element 3 wird also parallel zur Kontaktfläche 11 bewegt. Das radiale Spiel R wird dadurch bereitgestellt, dass der Durchmesser des Durchbruches 10 grösser ist als der Durchmesser des Abstandshalters 7, soweit dieser in den Durchbruch 10 einragt. Als Durchmesser wird im vorliegenden Falle nicht nur der Durchmesser eines kreisrunden Querschnittes verstanden, sondern auch die allgemeine Ausdehnung des Durchbruches 10 und des Abstandshalters 7 bezüglich ihrer Querschnittsform.

In der Sicherungslage ist der Abstand Z zwischen Kontaktfläche 11 und dem Anschlagsabschnitt 6 grösser als die Länge L des Durchbruches im zweiten Element 3 entlang der gleichen Richtung gesehen. Somit ist das zweite Element 3 relativ zum ersten Element 2 innerhalb des axialen Spiels A zwischen der Kontaktfläche 11 und dem Anschlagselement 6 bewegbar. Die Bewegung erfolgt typischerweise senkrecht zur Kontaktfläche 11. Das axiale Spiel A definiert sich dabei als Differenz zwischen dem Abstand Z und der Länge L.

Das axiale Spiel A kann durch einen Wulstabschnitt 17 weiter eingeschränkt werden. Der Wulstabschnitt 17 ist hier am Abstandhalter 7 angeordnet. Der Abstandshalter 7 weist im Bereich der Kontaktfläche 11 ein Wulstabschnitt 17 auf. Der Wulstabschnitt 17 liegt dabei zwischen den beiden Elementen 2, 3. Der Abstand Z' zwischen dem Wulstabschnitt 17 und dem Anschlagselement 6 ist dabei grösser als die Länge L des Durchbruches 10 im zweiten Element 3, sodass das zweite Element 3 relativ zum ersten Element zwei innerhalb des axialen Spiels zwischen dem Wulstabschnitt 17 und dem Anschlagsabschnitt 6 bewegbar ist.

Der Abstand Z' ist kleiner als der Abstand Z, aber die Grundbedingung, dass der Abstand Z grösser ist als die Länge L des Durchbruchs 10 ist auch beim Abstand Z' gültig.

Der Wulstabschnitt 17 erstreckt sich vollständig oder teilweise umlaufend um den Abstandshalter 7 herum und weist vorzugsweise eine Ausdehnung, insbesondere einen Durchmesser auf, welcher grösser ist als der Durchmesser des Durchbruches 10 im zweiten Element 2. Somit wirkt der Wulstabschnitt 17 zugleich als Sicherungselement für den Abstandshalter 7, welcher an der Unterseite 26 des zweiten Elementes 3 ansteht.

Der Abstandshalter 7 ist vorzugsweise als Hülse mit ersten Stirnfläche 15 und einer zweiten Stirnfläche 16 ausgebildet. Die Hülse ist im Querschnitt vorzugsweise ringförmig ausgebildet. Mittig durch die Hülse läuft dabei die Öffnung 8. Die Öffnung erstreckt sich entlang einer Mittelachse M.

In der Sicherungslage ist die erste Stirnfläche 15 mit der Kontaktfläche 11 des ersten Gehäuses in Kontakt und die zweite Stirnfläche 16 steht mit dem Anschlagsabschnitt 6 in Kontakt. Der gegebenenfalls vorhandene Wulstabschnitt 17 erstreckt sich von der ersten Stirnfläche 15 in Richtung der zweiten Stirnfläche 16 und vergrössert die Stirnfläche 15 entsprechend seines Durchmessers, sofern der Wulstabschnitt 17 im Bereich der Stirnfläche angeordnet ist. Der Wulstabschnitt 17 kann aber auch beabstandet zur entsprechenden Stirnfläche 15 liegen.

Von den Figuren kann gut erkannt werden, dass das Sicherungselement 4 eine Schraube ist. Der Befestigungsabschnitt 5 ist ein Aussengewinde 5 und der Anschlagsabschnitt 6 wird durch einen Schraubenkopf 12 bereitgestellt. Zwischen Befestigungsabschnitt 5 und Schraubenkopf 12 weist die Schraube 4 einen Schaftabschnitt 13 auf, dessen Durchmesser kleiner ist als der Kerndurchmesser des Aussengewindes 5. Der Schaftabschnitt 13 ist dabei mit keiner speziellen Oberflächenstruktur versehen und er ist im Wesentlichen zylinderförmig ausgebildet.

Das Aussengewinde 5 arbeitet mit der Aufnahme 9 im ersten Element 2 zusammen. Die Aufnahme 9 weist demnach die Gestalt eines Innengewindes 14 auf. Dabei kann die Schraube 4 mit dem Aussengewinde 5 in das Innengewinde 14 der Aufnahme 9 eingeschraubt werden. In der vollständig eingeschraubten Position wird der Abstandshalter 7 durch die Schraube 4 gegen das erste Element 2 geklemmt. Dies entspricht der besagten Sicherungslage.

Weiter weist die Öffnung 8 im Abstandshalter 7 ebenfalls ein Innengewinde auf. Dieses Innengewinde trägt das Bezugszeichen 23. Dieses Innengewinde 23 arbeitet ebenfalls mit dem Aussengewinde 5 des Sicherungselementes 4 zusammen. Wobei in der Sicherungslage die beiden Gewinde 5, 23 nicht in Eingriff sind. Das Innengewinde 23 dient im Wesentlichen als Sicherungselement, sodass die Schraube 4 nicht unbeabsichtigt aus der Öffnung 8 entfernt werden kann. Das Innengewinde 23 ist gegenüber des Wulstabschnittes 17 angeordnet und erstreckt sich von der zweiten Stirnfläche 16 in die Öffnung 8 der Hülse hinein. Bei der erstmaligen Montage wird die Schraube 4 mit dem Aussengewinde 5 mit dem Innengewinde 23 zusammenarbeiten, wobei die Schraube soweit von der zweiten Stirnfläche 17 her in die Öffnung 8 eingeschraubt wird, bis die beiden Gewinde 5, 23 wieder ausser Eingriff sind. Das Innengewinde 23 der Öffnung 8 des Abstandshalters 7 kommt dann in den Bereich des Schaftabschnittes 13 zu liegen. Aufgrund des Innengewindes 23 kann die Schraube 4 und der Abstandshalter 7 in einer unverlierbaren Weise mit dem zweiten Gehäuse 3 verbunden werden.

Bezüglich dem axialen Spiel A und dem radialen Spiel R kann gesagt werden, dass das axiale Spiel A vorzugsweise kleiner oder grösser ist als das radiale Spiel R. Das axiale Spiel A kann aber auch gleich dem radialen Spiel R sein. Das Spiel kann auf die entsprechende Funktion angepasst werden.

Das Aussengewinde 5 weist eine Länge D auf, welche kürzer ist als die Länge E. Die Länge E definiert sich als Distanz zwischen der ersten Stirnfläche 15 und dem Beginn des Innengewindes 23 in der Öffnung 8. Dieser Bereich wird als gewindefreier Teilbereich 24 der Öffnung 8 bezeichnet. Dieses Längenverhältnis zwischen der Länge D und der Länge E ist vorteilhaft, so dass die Schraube sicher ausser Eingriff mit dem Innengewinde 14 ist, ohne dass es zu einem Eingriff in das Innengewinde 23 kommt.

Wie bereits oben erläutert wird in der Figur 1 ein buchsenseitiger oder ein stiftseitiger Stecker 18 gezeigt, welcher ein als erstes Element 2 ausgebildetes Steckergehäuse 19 und ein mit dem Steckergehäuse 19 verbindbares als zweites Element 3 ausgebildetes Zusatzelement 20 aufweist. Das Zusatzelement 20 ist vorzugsweise ein Rahmenelement 20. Weiter sind hier zwei mechanische Sicherungsanordnungen 1 zur Sicherung des Zusatzelementes 20 zum Steckergehäuse 19, also zur Sicherung des ersten Elementes 2 zum zweiten Element 3 angeordnet. Das Zusatzelement 20 ragt hier in das Steckergehäuse 19 ein.

Der Stecker 18 umfasst hier mindestens eine Kontaktkammer 21 und mindestens eine Aufnahmekammer 22, welche im Wesentlichen über der Kontaktkammer 21 angeordnet ist. In der Kontaktkammer 21, welche hier am Steckergehäuse 19 angeordnet ist, wird ein Anschlussmodul mit elektrisch leitenden Elementen zur Verbindung an wenigstens eine periphere Vorrichtung, insbesondere ein Kabel, angeordnet. Das Kabel kann dabei über eine frontseitige Öffnung 27 in die Kontaktkammer 21 gelangen, wo dieses dann mit den elektrisch leitenden Elementen des Anschlussmoduls verbunden wird. Weiter umfasst hier das zweite Element 3, nämlich das Zusatzelement 20, das als Rahmenelement ausgebildet ist, mindestens eine Aufnahmekammer 22, in welcher ein Verschleissmodul mit elektrisch leitenden Elementen zur Verbindung mit einer zweiten peripheren Vorrichtung angeordnet ist. Die zweite periphere Vorrichtung ist insbesondere ein komplementärer Stecker. Die elektrisch leitenden Elemente des Anschlussmoduls sind dabei mit den elektrisch leitenden Elementen des Verschleissmoduls verbindbar.

In der in Figur 1 gezeigten Konfiguration liegt denn auch eine bevorzugte Ausführungsform beziehungsweise Anwendung der mechanischen Sicherungsanordnung 1. Besonders bevorzugt wird der Stecker gemäss der Figur 1 im Bereich der Robotertechnik angeordnet, wobei hier besondere Anforderungen bezüglich der Auswechselbarkeit gelten. Beispielsweise gibt es Anwendungsfälle, in welchen das Rahmenelement 20 möglichst schnell vom Steckergehäuse 19 getrennt werden soll. Hierfür sind lediglich die beiden Sicherungselemente 4 der beiden Sicherungsanordnungen 1 zu lösen, wobei dann die beiden Elemente 2, 3 voneinander getrennt werden können. Aufgrund des Wulstabschnittes 17 und des Innengewindes 23 wird die Schraube 4 und der Abstandshalter 7 zum zweiten Element gehalten. Es wird eine Verliersicherung bereitgestellt.

Bei der erneuten Montage ist das Spiel in radialer und axialer Richtung vorteilhaft, weil sich dann die beiden Elemente einfach zueinander ausrichten können, sodass eine gute und vor allem problemlose Verbindung zwischen elektrisch leitenden Elementen des Anschlussmoduls, das in der Kontaktkammer 21 angeordnet ist und des Verschleissmoduls, das in der Aufnahmekammer 22 angeordnet ist, gewährleistet werden kann.

In anderen Ausführungsformen können das erste bzw. das zweite Element auch die Form eines Schaltungsträgers oder einer Platine aufweisen. Das zweite bzw. das erste Element kann beispielsweise ein Träger oder ein Gehäuse sein.

**BEZUGSZEICHENLISTE**

| | | | |
|---|---|---|---|
| 1 | Sicherungsanordnung | 20 | Zusatzelement, Rahmenelement |
| 2 | erstes Element | 21 | Kontaktkammer |
| 3 | zweites Element | 22 | Aufnahmekammer |
| 4 | Sicherungselement | 23 | Innengewinde |
| 5 | Befestigungsabschnitt, Aussengewinde | 24 | gewindefreier Teilbereich |
| | | 25 | Oberseite |
| 6 | Anschlagsabschnitt | 26 | Unterseite |
| 7 | Abstandshalter | 27 | Frontöffnung |
| 8 | Öffnung | | |
| 9 | Aufnahme | | |
| 10 | Durchbruch | | |
| 11 | Kontaktfläche | A | Axiales Spiel |
| 12 | Schraubenkopf | D | Länge |
| 13 | Schaftabschnitt | E | Länge |
| 14 | Innengewinde | R | Radiales Spiel |
| 15 | erste Stirnfläche | L | Länge |
| 16 | zweite Stirnfläche | Z | Abstand |
| 17 | Wulstabschnitt | Z' | Abstand |
| 18 | Stecker | M | Mittelachse |
| 19 | Steckergehäuse | | |

## Patentansprüche

1. Mechanische Sicherungsanordnung (1) zur mechanischen relativen Sicherung von einem ersten Element (2) zu einem zweiten Element (3), insbesondere von zwei Elementen (19, 20) eines Gehäuses eines elektrischen Steckverbinders, umfassend ein Sicherungselement (4) mit einem Befestigungsabschnitt (5) und einem Anschlagsabschnitt (6), einem Abstandshalter (7) mit einer Öffnung (8), durch welche sich das Sicherungselement (4) teilweise hindurch erstreckt, ein erstes Element (2) mit einer Aufnahme (9) zur Aufnahme des Befestigungsabschnittes (5) vom Sicherungselement (4) und ein zweites Element (3) mit einem sich von einer Oberseite (25) zu einer Unterseite (26) erstreckenden Durchbruch (10), durch welchen sich der Abstandshalter (7) und das Sicherungselement (4) teilweise hindurch erstrecken,
wobei das Sicherungselement (4) von einer die freie Relativbewegung zwischen den beiden Elementen (2, 3) zulassende Freigabelage in eine die Relativbewegung einschränkende Sicherungslage bringbar ist,
wobei sich der Anschlagsabschnitt (6), insbesondere auf der besagten Oberseite (25), zumindest teilweise seitlich über den Durchbruch (10) erstreckt und dadurch einen Anschlag für das erste Element (2) bereitstellt, und
wobei der Abstandshalter (7) an einer Kontaktfläche (11) des ersten Elementes (2) anliegt und mit dem Anschlagsabschnitt (6), der beabstandet zur Kontaktfläche (11) liegt, zum ersten Element (2) in Sicherungslage fest geklemmt wird,
**dadurch gekennzeichnet,**
**dass** zwischen dem Durchbruch (10) des zweiten Elementes (3) und dem Abstandshalter (7) radiales Spiel (R) vorhanden ist, so dass das zweite Element (3) relativ zum ersten Element (2) innerhalb des radialen Spiels (R) bewegbar ist und
**dass** in Sicherungslage der Abstand (Z) zwischen der Kontaktfläche (11) und dem Anschlagsabschnitt (6) grösser ist als die Länge (L) des Durchbruchs (10) im zweiten Element (3), so dass das zweite Element (3) relativ zum ersten Element (2) innerhalb eines axialen Spiels (A) zwischen der Kontaktfläche (11) und dem Anschlagsabschnitt (6) bewegbar ist.

2. Mechanische Sicherungsanordnung nach Anspruch 1, **dadurch gekennzeichnet, dass** der Abstandshalter (7) ein im Bereich der Kontaktfläche (11) liegender Wulstabschnitt (17) aufweist, welcher zwischen den beiden Elementen (2, 3) liegt, wobei der Abstand (Z') zwischen dem Wulstabschnitt (17) und dem Anschlagsabschnitt (6) grösser ist als die Länge (L) des Durchbruchs (10) im zweiten Element (3), so dass das zweite Element (3) relativ zum ersten Element (2) innerhalb eines axialen Spiels (A) zwischen dem Wulstabschnitt (17) und dem Anschlagsabschnitt (6) bewegbar ist.

3. Mechanische Sicherungsanordnung nach Anspruch 2, **dadurch gekennzeichnet, dass** der Wulstabschnitt (17) sich vollständig oder teilweise umlaufend um den Abstandshalter (7) herum erstreckt und eine Ausdehnung, insbesondere einen Durchmesser, aufweist, welcher grösser ist als der Durchmesser des Durchbruches (10) im zweiten Element (3).

4. Mechanische Sicherungsanordnung nach einem der vorhergehenden Ansprüche, **dadurch gekennzeichnet, dass** der Abstandshalter (7) als Hülse mit einer ersten Stirnfläche (15) und einer zweiten Stirnfläche (16) ausgebildet ist, wobei die Hülse im Querschnitt vorzugsweise ringförmig ausgebildet ist.

5. Mechanische Sicherungsanordnung nach Anspruch 4, **dadurch gekennzeichnet, dass** in Sicherungslage die erste Stirnfläche (15) mit der Kontaktfläche (11) und die zweite Stirnfläche (16) mit dem Anschlagsabschnitt (6) in Kontakt sind, wobei der ggf. vorhandene Wulstabschnitt sich von der ersten Stirnfläche (15) in Richtung der zweiten Stirnfläche (16) erstreckt.

6. Mechanische Sicherungsanordnung (1) nach einem der vorhergehenden Ansprüche, **dadurch gekennzeichnet, dass** das Sicherungselement (4) eine Schraube ist, wobei der Befestigungsabschnitt (5) ein Aussengewinde (5) ist und der Anschlagsabschnitt (6) durch den Schraubenkopf (12) bereitgestellt wird.

7. Mechanische Sicherungsanordnung nach Anspruch 6, **dadurch gekennzeichnet, dass** die Schraube (4) zwischen Aussengewinde (5) und Schraubenkopf (12) ein Schaftabschnitt (13) umfasst, dessen Durchmesser kleiner als der Kerndurchmesser des Aussengewindes (5) ist.

8. Mechanische Sicherungsanordnung nach Anspruch 6 oder 7, **dadurch gekennzeichnet, dass** die Aufnahme (9) im ersten Element (2) ein Innengewinde (14) umfasst.

9. Mechanische Sicherungsanordnung nach einem der Ansprüche 6 bis 8, **dadurch gekennzeichnet, dass** die Öffnung (8) im Abstandshalter (7) ein Innengewinde (23) aufweist, welches mit dem Aussengewinde (5) des Sicherungselementes (4) zusammenarbeitet, wobei in der Sicherungslage die beiden Gewinde (5, 23) vorzugsweise nicht im Eingriff sind.

10. Mechanische Sicherungsanordnung nach Anspruch 9, **dadurch gekennzeichnet, dass** das Innengewinde (23) im Abstandshalter (7) sich nur über einen Teilbereich der Öffnung (8) erstreckt, wobei der gewindefreie Teilbereich (24) länger ist als die Länge des Innengewindes (14) im ersten Element (2)

11. Mechanische Sicherungsanordnung nach einem der vorhergehenden Ansprüche, **dadurch gekennzeichnet, dass** der Anschlagsabschnitt (6) eine Ausdehnung, insbesondere einen Durchmesser, aufweist, welche(r) grösser ist als der Durchmesser des Durchbruches (10) im zweiten Element (3).

12. Mechanische Sicherungsanordnung nach einem der vorhergehenden Ansprüche, **dadurch gekennzeichnet, dass** das axiale Spiel (A) kleiner oder grösser ist als das radiale Spiel (R), oder dass das axiale Spiel (A) gleich dem radialen Spiel (R) ist.

13. Buchsenseitiger oder stiftseitiger Stecker (18) umfassend ein als erstes Element (2) ausgebildetes Steckergehäuse (19) und ein mit dem Steckergehäuse (19) verbindbares als zweites Element (3) ausgebildetes Zusatzelement (20), insbesondere ein Rahmenelement, sowie mindestens eine mechanische Sicherungsanordnung (1) zur Sicherung des Zusatzelements (20) zum Steckergehäuse (19) nach einem der vorhergehenden Ansprüche.

14. Stecker nach Anspruch 13, **dadurch gekennzeichnet, dass** das Steckergehäuse (19) in das Zusatzelement (20) einragt oder dass das Zusatzelement (20) in das Steckergehäuse (19) einragt.

15. Stecker nach einem der Ansprüche 13 bis 14, **dadurch gekennzeichnet, dass** der Stecker (18) mindestens eine Kontaktkammer (21) und mindestens eine Aufnahmekammer (22) umfasst, welche im wesentlichen über der Kontaktkammer (21) angeordnet ist, und wobei in der mindestens einen Kontaktkammer (21) ein Anschlussmodul mit elektrisch leitenden Elementen zur Verbindung an wenigstens eine erste periphere Vorrichtung, insbesondere ein Kabel, und in der mindestens einen Aufnahmekammer (22) ein Verschleissmodul mit elektrisch leitenden Elementen zur Verbindung mit einer zweiten peripheren Vorrichtung, insbesondere ein komplementärer Stecker, anordbar ist, wobei die elektrisch leitenden Elemente des Anschlussmoduls mit den elektrisch leitenden Elementen des Verschleissmoduls verbindbar sind.
